# EUROPÄISCHE PATENTSCHRIFT

(11) **EP 3 789 142 B1**
(45) Veröffentlichungstag und Bekanntmachung des Hinweises auf die Patenterteilung: **06.11.2024**
(21) Anmeldenummer: 19195404.9
(22) Anmeldetag: 04.09.2019
(51) Int. Cl.: B23B 35/00, B23B 49/02

(54) **SYSTEM ZUR STEUERUNG UND ÜBERWACHUNG VON BOHRPROZESSDATEN**
SYSTEM FOR CONTROLLING AND MONITORING DRILLING PROCESS DATA
SYSTÈME DE COMMANDE ET DE SURVEILLANCE DE DONNÉES DE PROCESSUS DE PERÇAGE

(43) Veröffentlichungstag der Anmeldung: 10.03.2021
(73) Patentinhaber: Johannes Lübbering GmbH, 33442 Herzebrock-Clarholz (DE)
(72) Erfinder: LÜBBERING, Achim, 33442 Herzebrock-Clarholz (DE); LANGHORST, Thomas, 33428 Harsewinkel-Greffen (DE); HINTZE, Wolfgang, 21077 Hamburg (DE); MEHNEN, Jan, 22081 Hamburg (DE); ROMANENKO, Denys, 21073 Hamburg (DE); SIKORRA, Jan Niklas, 22765 Hamburg (DE); STEINBACH, Stefan, 21244 Buchholz i.d.N. (DE)
(74) Vertreter: Patent- und Rechtsanwälte Behrmann Wagner PartG mbB

(56) Entgegenhaltungen:
- WO-A1-2005/120752
- CN-A- 103 157 831
- DE-B4- 10 262 302

## Beschreibung

Die vorliegende Erfindung betrifft ein System zur Steuerung und Überwachung von Bohrprozessdaten. Insbesondere betrifft die vorliegende Erfindung ein System zur Bereitstellung eines ganzheitlichen Bohrprozesses zur Fertigung von Bohrungen mit bedarfsgerechten Maschineneinstellparametern und zur Überwachung des Bearbeitungsprozesses basierend auf bereitgestellten Überwachungsparametern.

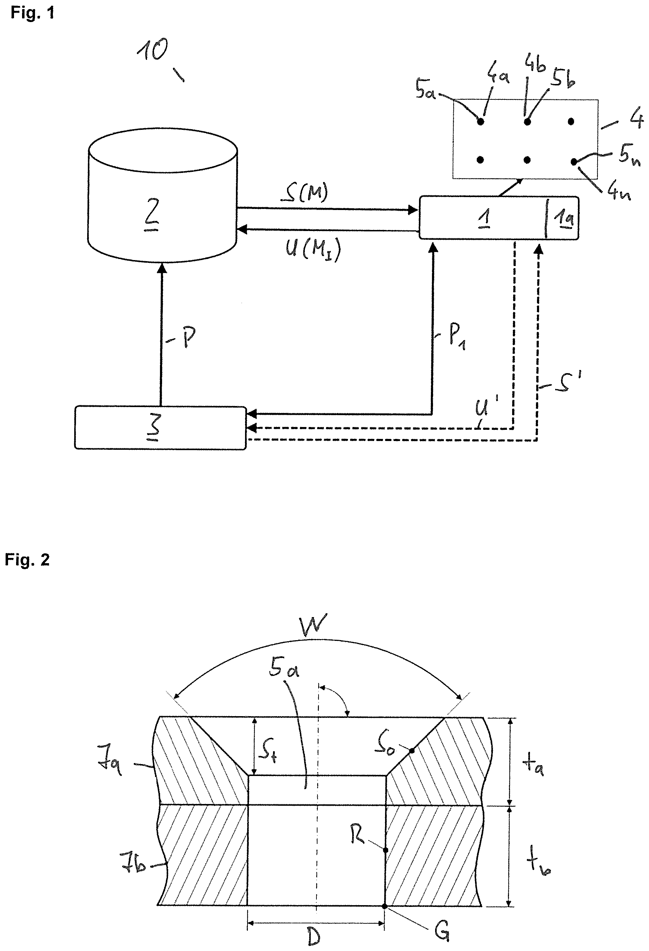

In der Industrieproduktion, insbesondere bei der Flugzeugmontage werden u. a. aus Sicherheitsgründen hohe Anforderungen an die Qualität von zu fertigenden bzw. zu setzenden Bohrungen gestellt. Hierbei handelt es sich beispielsweise um Vorgaben hinsichtlich Durchmesserabweichung, Winkelfehler, Ein- und Austrittgrat, Rauheit der Bohrungsinnenwand, und/oder Senkwinkel- und Senktiefe (vgl. Fig. 2). Das Spektrum der zu bearbeiteten Materialien ist dabei sehr breit gefächert, von unterschiedlichen metallischen Werkstoffen bis hin zu faserverstärkten Kunststoffen. Diese Materialien können auch als zusammenhängendes Materialpaket vorliegen, d.h. wenigstens umfassend zwei vorzugsweise angrenzende Materialschichten, welches in einem durchgängigen Bohrvorgang, einem sogenannten "One-Shot-Drilling" bearbeitet bzw. gebohrt werden kann. Für diesen Zweck werden Bohrwerkzeuge hergestellt, die alle vorliegenden Materialien bearbeiten können, die jedoch für die einzelnen Materialien individuelle Maschineneinstellparameter (z. B. Vorschub, Drehzahl, Peck-Feed-Frequenz, ...) benötigen, um eine optimale Bohrungsqualität und Produktivität in jedem Material zu gewährleisten.

Zudem existieren neben einem spezifischen Material weitere Einflussparameter für die Bohrungsqualität, beispielsweise die Aufspannsteifigkeit eines zu bearbeitenden Werkstücks bzw. Bauteils. Bei gleichen Prozessparametern und Materialeigenschaften, aber unterschiedlichen Aufspannungssteifigkeiten kommt es zu einer unterschiedlichen Interaktion zwischen Bauteil, Bohrmaschine und Werkzeug, wodurch die Bohrungsqualität in Richtung kleinerer Aufspannungssteifigkeiten negativ beeinflusst werden kann.

Neben den oben genannten Qualitätsanforderungen an die zu fertigenden Bohrungen gibt es aufgrund Fertigungskostenvorgaben üblicherweise eine einzuhaltende Bearbeitungszeit, in welcher eine große Vielzahl von Bohrungen mit der geforderten Bohrungsqualität im Bauteil zu fertigen ist.

Die marktüblichen pneumatischen oder elektrischen manuellen und semiautomatischen Bohrmaschinen ermöglichen keine individuelle Bohrprozessparameteranpassung, welche für eine optimale Werkstoffbearbeitung und einen effizienten Produktionsprozess ohne Werkzeugwechsel notwendig ist. Ebenso ermöglichen die marktüblichen Bohrmaschinen keine Qualitätsüberwachung der gefertigten Bohrungen.

Die WO 2005/120752 A1 zeigt ein Verfahren zur Erzeugung von Löchern in einem Werkstück unter Verwendung einer Bohrmaschine, wobei das Werkstück eine darauf befestigte Vorlage mit vorgeformten Führungslöchern aufweist. Jedes Führungsloch ist mit einem lesbaren Informationsträger versehen, der eine Kennzeichnung des jeweiligen Führungslochs enthält. Beim Fixieren der Bohrmaschine in einem Führungsloch wird dieses von einer Lochdatenbank durch Abtasten des jeweiligen Informationsträgers identifiziert. Eine der Lochdatenbank zugeordnete Steuereinheit steuert die Bohrmaschine, um einen relevanten Lochschneidvorgang in das Werkstück auszuführen.

Die DE 102 62 302 B4 offenbart ein Betriebsverfahren für eine Handwerkzeugmaschine, bei dem in einem Speicher Steuerdaten zur Steuerung des Betriebs der Handwerkzeugmaschine gespeichert werden, wobei ein externes Programmiergerät verwendet wird, das über eine drahtlose Verbindung mit einer Datenschnittstelle verbunden wird, um eine bidirektionale Datenübertragung zu erreichen und die in dem Speicher abgelegten Steuerdaten individuell an einen Benutzer und/oder ein Einsatzgebiet anzupassen.

Die CN 103 157 831 A zeigt ein Justiersystem zum Ausrichten einer Bohrstelle für einen digital gesteuerten Bohrer, wobei eine GPS-Positionierungseinheit zum Erfassen von GPS Daten verwendet wird, um Koordinaten der Position eines zu bearbeitenden ersten Bohrlochs in Echtzeit zu erfassen.

Aufgabe der Erfindung ist es daher, ein System zur Prozessbeschleunigung und Optimierung der Bohrungsqualität bereitzustellen, welches die oben genannten Nachteile des Standes der Technik überwindet oder zumindest deutlich abschwächt. Gleichzeitig soll eine effiziente Qualitätsüberwachung der gefertigten Bohrungen ermöglicht werden. Die zugrundeliegende Aufgabe wird durch das System mit den Merkmalen des unabhängigen Anspruchs gelöst. Vorteilhafte Weiterbildungen der Erfindung sind in den Unteransprüchen beschrieben.

In einem ersten Aspekt betrifft die vorliegende Erfindung ein System zur Steuerung und Überwachung von Bohrprozessdaten bei der Bearbeitung eines Werkstücks, insbesondere bei der Bearbeitung eines Flugzeugstrukturbauteils, nach Anspruch 1 aufweisend eine manuelle oder semi-automatische Bohrmaschine, ausgebildet eine Bearbeitung eines Werkstücks basierend auf adaptierbaren Maschineneinstellparametern durchzuführen, eine Steuerungseinheit zur Steuerung und Speicherung von Bohrprozessdaten, Positioniermittel zur Erfassung einer Bearbeitungsposition der Bohrmaschine am zu bearbeitenden Werkstück und zur direkten oder indirekten Bereitstellung von entsprechenden Positionsdaten an die Steuerungseinheit, wobei die Steuerungseinheit ausgebildet ist, basierend auf den bereitgestellten Positionsdaten vorzugsweise automatisch individuelle Daten- oder Triggersignale, insbesondere individuelle Maschineneinstellparameter, an die Bohrmaschine zur Bearbeitung des Werkstücks bereitzustellen, und wobei die Bohrmaschine ausgebildet ist, bei der Bearbeitung des Werkstücks Überwachungsparameter zu erfassen und diese der Steuerungseinheit bereitzustellen.

Das erfindungsgemäße System ermöglicht die individuelle und positionsbezogene Bereitstellung von Daten- oder Triggersignalen, insbesondere von individuellen Maschineneinstellparametern und somit die individuelle Fertigung von Bohrlöchern an einem Werkstück bzw. Bauteil basierend auf von der Steuerungseinheit bereitgestellten Bohrprozessdaten. Hierdurch wird eine äußerst effiziente Bearbeitung des Bauteils mit positionsbezogenen und somit bohrungsindividuellen Bohrprozessdaten ermöglicht, wobei individuelle Vorgaben, beispielsweise aufgrund unterschiedlicher zu bearbeitender Materialien oder Materialpakete, für jede zu setzende Bohrung vorzugsweise ohne manuellen Eingriff eines Benutzers bzw. Werkers berücksichtigt werden können. Zudem wird eine Fehlereliminierung, insbesondere von manuellen Bedienfehlern, im Herstellungsprozess ermöglicht. Gleichzeitig ermöglicht das vorliegende System eine optimierte Qualitätsüberwachung und -beurteilung des Fertigungsprozesses an einem Bauteil durch die während der Bearbeitung der einzelnen Bohrlöcher bereitgestellten Überwachungsparameter. Hierdurch wird selbst für eine große Vielzahl an zu setzenden Bohrungen ein lückenloses Fertigungsprozesstracking mit dazugehöriger Dokumentation von Überwachungsgrößen und eine daraus ableitbare Qualitätsbeurteilung ermöglicht. Zudem ermöglicht das System eine Entlastung der Werker hinsichtlich manuell vorzunehmender Einstellungen der Bohrmaschine und manueller Dokumentation von gefertigten Bohrungen.

Die Bohrmaschine, die Steuerungseinheit und/oder die Positioniermittel sind vorzugsweise zur bidirektionalen und/oder drahtlosen Kommunikation ausgebildet. Hierdurch kann zwischen den einzelnen Komponenten des Systems eine vorzugsweise drahtlose Daten- und/oder Triggersignal-Kommunikation erfolgen. Die einzelnen Komponenten können alternativ zur drahtgebundenen Kommunikation ausgebildet sein. Unter Datensignalen werden vorliegend jegliche Bohrprozessdatensignale verstanden. Unter Triggersignalen werden vorliegend insbesondere Signale verstanden, welche eine Aktion in bzw. an der Bohrmaschine auslösen und/oder zu einer Anpassung der adaptierbaren Maschineneinstellparameter der Bohrmaschine führen. Die Daten- und/oder Triggersignale können insbesondere Maschineneinstellparameter für die Bohrmaschine umfassen, entweder als absolute Werte oder wenigstens teilweise in kodierter Form.

Die von der Steuerungseinheit gespeicherten Bohrprozessdaten umfassen vorzugsweise wenigstens Maschineneinstellparameter für die Bohrmaschine, Überwachungsparameter, welche von der Bohrmaschine bereitgestellt werden, und vorzugsweise jeweils zugehörige Positionsdaten. Die Steuerungseinheit ist vorzugsweise ausgebildet der Bohrmaschine material-, materialpaket- und/oder aufspannungs-steifigkeitsabhängige Maschineneinstellparameter bzw. diesen entsprechende Daten- und/oder Triggersignale basierend auf den bereitgestellten Positionsdaten der Positioniermittel bereitzustellen. Die entsprechenden Daten können dabei variabel über die jeweilige Bohrprozesszeit für die Fertigung einer Bohrung hinterlegt sein. Die jeweiligen Daten sind vorzugsweise in der Steuerungseinheit gespeichert, vorzugsweise zusammen mit den jeweiligen Positionsdaten, an welchen eine Bearbeitung bzw. ein Setzen einer Bohrung am Werkstück erfolgen soll. Die Steuerungseinheit kann hierfür interne oder externe Speichermittel aufweisen, beispielweise eine Datenbank, in welcher die jeweiligen Daten hinterlegt sind. Die Steuerungseinheit kann zudem für jede Position bzw. für jede am Bauteil zu setzende Bohrung und/oder material-, materialpaket- oder aufspannungs-steifigkeitsabhängige Sollwerte, Grenzwerte oder Wertebereiche gespeichert haben, welche zur elektronischen Verarbeitung der Bohrmaschine bereitgestellt werden können.

Die jeweiligen Bohrprozessdaten werden vorzugsweise vor einer Bearbeitung des jeweiligen Werkstücks in die Steuerungseinheit eingepflegt. Dies kann beispielsweise in an sich bekannter Weise mithilfe von Datenschnittstellen und/oder basierend auf einer Vorgabe einer Prozessplanungssoftware erfolgen. Insbesondere können vor Beginn der Fertigung am jeweiligen Bauteil Einträge für die Soll-Positionsdaten in einem definierten Koordinatensystem, die dazugehörigen Maschineneinstellparamater, die Prozessverlaufsgrößen wie beispielsweise "Bohrfreigabe" oder "Bohrung gefertigt", Platzhalter für Überwachungsparameter und/oder diesen entsprechende Kennzahlen, die daraus abgeleiteten Qualitätsmerkmale und/oder Lerndaten für Algorithmen zum maschinellen Lernen in der Steuerungseinheit bzw. in einer dieser zugeordneten Speicher- oder Datenbankeinheit hinterlegt werden.

Die Positioniermittel zur Erfassung und Bereitstellung der Bearbeitungsposition bzw. der Wirkposition der Bohrmaschine ermöglichen vorzugsweise die Erfassung der Bohrmaschine in einem zuvor festgelegten Koordinatensystem am zu bearbeitenden Bauteil. Unter Wirkposition wird vorliegend der Ort verstanden, an dem der Zerspanprozess bei der Bohrungsherstellung stattfindet. Hierdurch kann eine aktuelle Position der Bohrmaschine am Bauteil überwacht und an die Steuerungseinheit zur Bereitstellung von entsprechenden wirkpositionsbezogenen Bohrprozessdaten, insbesondere Maschineneinstellparametern, übermittelt werden.

Die Positioniermittel können hierbei in vielfältiger Weise verwirklicht werden. Beispielsweise können die Positioniermittel wenigstens einen auf dem Bauteil angebrachten und dem Fachmann bekannten mechanischen Adapter oder eine Schablone aufweisen, welcher/welche mittels an der Bohrmaschine angebrachten Erfassungsmitteln, beispielsweise Kamera- und/oder RFID-basiert, eine entsprechende Positionserfassung der Maschine in einem vordefinierten Koordinatensystem am Bauteil ermöglicht. Alternativ können die Positioniermittel auch eine an der Bohrmaschine anbringbare Sender/Empfängereinheit aufweisen, welche mittels zugehöriger Sender- und/oder Empfängereinheiten am Bauteil eine Positionsbestimmung der Bohrmaschine am Bauteil oder an einer Aufspannung, welche sich in einer bekannten Position gegenüber dem Bauteil befindet, ermöglicht, beispielsweise basierend auf Ultraschall. Ein derartiges System ist dem Fachmann beispielsweise aus der DE 10 2010 034 151 A1 oder der DE 20 2012 010 638 U1 bekannt.

Zwischen den Positioniermitteln und der Bohrmaschine kann eine Schnittstelle implementiert sein, die einen Austausch bzw. eine Übermittlung von Daten- oder Triggersignalen ermöglicht. Die Positioniermittel und die Steuerungseinheit können als integrierte Einheit oder als zwei separate Einheiten bereitgestellt werden. Im letzteren Fall sind diese vorzugsweise zur bidirektionalen drahtlosen Kommunikation wie oben beschrieben ausgebildet.

Die Bohrmaschine ist vorzugsweise mit einem elektrischen oder pneumatischen Antrieb ausgestattet. Die Bohrmaschine kann alternativ einen andersartigen Antrieb aufweisen.

Die Bohrmaschine weist vorzugsweise eine Schnittstelle zur Datenkommunikation auf, mittels derer die Bohrmaschine mit der Steuerungseinheit und/oder den Positioniermitteln kommunizieren kann. Hierdurch können insbesondere jegliche Bohrprozessdaten, Positionsdaten, und/oder Daten- und Triggersignale zwischen der Bohrmaschine, der Steuerungseinheit und/oder den Positioniermitteln übertragen werden. Beispielsweise können Triggersignale von der Steuerungseinheit bereitgestellt werden, welche unmittelbar zu einer Maschineneinstellparameteränderung an der Bohrmaschine führen, beispielsweise einer Erhöhung einer Spindeldrehzahl. Auch können Triggersignale bereitgestellt werden, basierend auf welchen ein Auslösen eines Bearbeitungsprozesses bzw. das Setzen einer Bohrung an einer jeweiligen erfassten Bearbeitungsposition der Bohrmaschine möglich ist oder nicht. Auf diese Weise kann eine Bearbeitungsreihenfolge für die Bohrmaschine am Bauteil vorgegeben bzw. eine Abweichung von einer vorgegebenen Bearbeitungsreihenfolge vermieden werden. Hierdurch ist es möglich, ein bestimmtes, geplantes Bohrschema vorzugeben und einzuhalten.

Die Bohrmaschine kann zudem Navigationsmittel aufweisen oder mit Navigationsmitteln verbindbar sein, welche zur vorzugsweise graphischen Darstellung und/oder zur Führung der Bohrmaschine bzw. eines diese benutzenden Werkers an eine vordefinierte, vorzugsweise eine nächste, Bearbeitungsposition ausgebildet sind. Auf diese Weise kann insbesondere bei einer Vielzahl zu fertigenden Bohrungen an einem Bauteil eine Führung und somit eine vereinfachte Bearbeitung durch den Werker ermöglicht werden.

Die Bohrmaschine ist vorzugsweise derart ausgebildet, eine Bohrung im Bauteil basierend auf adaptierbaren, bereitgestellten Maschineneinstellparametern bzw. diese umfassende oder repräsentierende Daten- und Triggersignale zu fertigen. Insbesondere kann die Bohrmaschine durch ein internes oder externes Steuersystem Daten- und Triggersignale empfangen bzw. erfassen und basierend darauf eine variable Einstellung von Maschineneinstellparametern bzw. Schnittparametern durchführen. Die bereitgestellten Maschineneinstellparameter können wenigstens eine Spindeldrehzahl, einen Vorschub, einen Schmiermittelstrom, ein Mittel zur Absaugung, eine Amplitude oder eine Frequenz eines Peck-Feed-Systems, einen intermittierenden Rückhub und/oder eine Verweilzeit der Bohrmaschine vor, zwischen, oder nach einzelnen Bearbeitungsschritten an einer jeweiligen Bearbeitungs- bzw. Wirkposition umfassen. Die Daten- und Triggersignale können zudem eine adaptive Parameteranpassung z.B. bei Schichtwechsel oder weitere Parameter zur Einstellungsänderung der Maschinenparameter umfassen. Diese weiteren Parameter können positionsspezifisch oder nicht-positionsspezifisch sein.

Die Bohrmaschine weist vorzugweise eine Sensorik zur Erfassung von Überwachungsparametern auf. Die Sensorik kann beispielsweise Motorstrom-, Beschleunigungs-, Drehzahl-, Vorschubweg-, Kraft-, Moment- oder Temperatursensoren oder jegliche andere Sensoren umfassen. Vorzugsweise weist die Bohrmaschine wenigstens eine Sensorik zur Erfassung einer Stromaufnahme, eines Luftvolumenstroms, einer Drehzahl und /oder eines pneumatischen Differenzdrucks eines oder mehrerer Antriebe der Bohrmaschine und/oder eines ein- oder mehrachsigen, translatorischen und/oder rotatorischen Beschleunigungssignals, beispielsweise mittels eines Gyroskops auf.

Die bereitgestellten Überwachungsparameter umfassen vorzugsweise Ist-Maschinenparameter, welche bei der Umsetzung der von der Steuerungseinheit vorgegebenen Maschineneinstellparameter bzw. Soll-Maschinenparameter durch die Sensorik der Maschine erfasst werden. Die Ist-Maschinenparameter können somit durch die Steuerungseinheit und/oder die Bohrmaschine mit vorgegebenen Soll-Maschinenparametern bzw. Maschineneinstellparametern der Bohrmaschine verglichen werden. Die Überwachungsparameter können zudem weitere Parameter oder Überwachungsgrößen umfassen, wie beispielsweise einen ein- oder mehrachsigen, translatorischen und/oder rotatorischen Beschleunigungswert, die Zeitdauer eines Prozesses oder Teilprozesses oder die Temperatur in der Maschine.

Die Überwachungsparameter können als absolute Werte bzw. Größen oder wenigstens teilweise kodiert bereitgestellt bzw. übermittelt werden.

Erfindungsgemäß ist die Steuerungseinheit ausgebildet, die von der Bohrmaschine bereitgestellten Überwachungsparameter für eine gefertigte Bohrung einer jeweiligen Bearbeitungsposition zuzuordnen.

Vorzugsweise können die bereitgestellten Überwachungsparameter hierbei den für die jeweilige Wirkposition gespeicherten Bohrprozessdaten hinzugefügt werden.

Zusätzlich kann die Steuerungseinheit ausgebildet sein, die von der Bohrmaschine bereitgestellten Überwachungsparameter mit vordefinierten und/oder berechneten Sollwerten, insbesondere mit bereitgestellten Maschineneinstellparametern, mit Grenzwerten oder mit Wertebereichen einer jeweiligen gefertigten Bohrung zu vergleichen.

Vorzugsweise ist die Steuerungseinheit hierbei ausgebildet, die vordefinierten Sollwerte, Grenzwerte oder Wertebereiche positions-, material-, materialpaket-, und/oder aufspannungssteifigkeits-abhängig zu speichern und zur elektronischen Datenverarbeitung bereitzustellen. Die entsprechenden Daten können vor einer Bearbeitung des Bauteils in der Steuerungseinheit hinterlegt werden.

Die Sollwerte, Grenzwerte oder Wertebereiche können zudem wenigstens teilweise auf Basis von von der Bohrmaschine bereitgestellten Überwachungsparametern berechnet oder definiert sein. Zusätzlich oder alternativ können die jeweiligen Sollwerte, Grenzwerte oder Wertebereiche basierend auf einem vorzugsweise während des Bearbeitungsverfahrens an einem Bauteil fortlaufenden Algorithmus zur Qualitätsauswertung, vorzugsweise basierend auf künstlicher Intelligenz (KI), angepasst werden. Hierfür können entsprechende KI-Algorithmen oder antrainierte künstliche neuronale Netzwerke verwendet werden.

Die Steuerungseinheit und/oder die Bohrmaschine sind vorzugsweise ausgebildet, bei einer zu fertigenden Bohrung die bereitgestellten Maschineneinstellparameter und die zugehörigen Überwachungsparameter, insbesondere die entsprechenden Ist-Maschinenparameter, vorzugsweise simultan zu vergleichen, und bei Abweichung der Überwachungsparameter, insbesondere von vordefinierten Sollwerten, Grenzwerten oder Wertebereichen, eine Anpassung der Maschineneinstellparameter bzw. der diese repräsentierende Daten- oder Triggersignale vorzunehmen. Falls beispielsweise während des Bohrprozesses durch die in-situ Verarbeitung der Überwachungsgrößen Abweichungen der Soll-Maschineneinstellparameter von den Ist-Maschinenparameter festgestellt werden, ermöglicht die Steuerungseinheit und/oder die Bohrmaschine mittels Bereitstellen entsprechender Triggersignale eine Anpassung der Maschineneinstellparameter, um eine höchstmögliche Qualität der Bohrung zu gewährleisten.

Alternativ oder zusätzlich können Sollwerte, Grenzwerte oder Wertebereiche für Maschineneinstellparameter oder Überwachungsparameter, wie beispielsweise entsprechende Soll-Maschinenparameter, bohrungsindividuell und wenigstens temporär in einer Speichereinheit der Bohrmaschine hinterlegt sein, um bei einem Verbindungsverlust zur Steuerungseinheit und/oder aus Geschwindigkeitsgründen die Prozesssicherheit zu gewährleisten.

In einer bevorzugten Ausführungsform ist die Steuerungseinheit und/oder die Bohrmaschine ausgebildet, basierend auf von der Bohrmaschine bereitgestellten Überwachungsparametern bzw. -größen bezüglich eines Motorstrom- und Drehzahlsignals oder einer anderen mit der Motorleistung korrelierenden Größe über eine Bohrzeit ein Schnittmoment, eine Zerspanleistung und/oder eine Zerspanenergie zu bestimmen und einer gefertigten Bohrung an einer jeweiligen Bearbeitungsposition zuzuordnen. Die Steuerungseinheit kann beispielsweise ausgebildet sein, der Bohrmaschine eine maximale Spindeldrehzahl und/oder einen maximalen Vorschub in Abhängigkeit der jeweiligen Bearbeitungsposition und der aufgebrachten Zerspanleistung, aufgebrachten Zerspanungsenergie, einer Bohrzeit und/oder einer aktuellen bzw. momentanen Bohrtiefe bereitzustellen. Die Steuerungseinheit kann zudem ausgebildet sein, ein von der Bohrmaschine bereitgestelltes Beschleunigungssignal zur Auswertung hinsichtlich einer Fehlbedienung oder Kollision der Bohrmaschine mit dem Werkstück oder eines Zubodenfallens zu überwachen.

Weiter kann die Steuerungseinheit und/oder die Bohrmaschine ausgebildet sein, vorzugsweise aus Signalen des Motorstroms, der Drehzahl und einer erfassten Bohrzeit die zunehmende Zerspanenergie eines Bohrvorgangs und/oder einen Fortschritt des Bohrvorgangs zu bestimmen und davon abhängig Maschinenparameter zu steuern.

In einer bevorzugten Ausführungsform ist die Steuerungseinheit ausgebildet, die bereitgestellten Überwachungsparameter den jeweiligen gefertigten Bohrungen an den Bearbeitungs- bzw. Wirkpositionen zuzuordnen und zu Dokumentationszwecken vorzugsweise bauteilbezogen und/oder bauteilabschnittsbezogen abzuspeichern. Die Steuerungseinheit kann zudem ausgebildet sein, weitere Informationen wie beispielsweise Informationen hinsichtlich Prozesslasten, einer Bohrungsqualität einzelner Bohrungen und/oder einem aufgetretenen Werkzeugverschleiß zu erfassen, und/oder mit den erfassten Überwachungsparametern zu vergleichen.

Die Steuerungseinheit kann interne oder externe Datenanalysemittel umfassen, welche die gespeicherten Daten für ein jeweiliges Bauteil analysieren und/oder zur weiteren elektronischen Datenverarbeitung exportieren können. Beispielsweise kann die Steuerungseinheit ausgebildet sein, nach einem jeweiligen Bohrprozess oder nach einer Bearbeitung eines jeweiligen Bauteils die Überwachungsparameter oder Überwachungsparameter-verläufe auszuwerten und mittels spezifischer mathematischer Verfahren zu analysieren. Dabei kann festgestellt werden, ob sich die aufgenommenen Überwachungsparameter in einem definierten Bereich befinden und damit auf eine geforderte Bohrungsqualität hinweisen oder nicht. Zur Vermeidung unnötigen Speicherplatzbedarfs in der Steuerungseinheit bzw. einer Datenspeichereinheit der Steuerungseinheit können die aufgenommenen Kurven auf Kennzahlen reduziert werden, um eine sofortige Beurteilung der gefertigten Bohrung vorzunehmen.

Die Steuerungseinheit kann zudem ausgebildet sein, eine Prozesssteuerung, Prozessanpassung und Prozessauswertung basierend auf den über eine Vielzahl von gesetzten Bohrungen gesammelten Überwachungsparametern und basierend auf zuvor definierten mathematischen Modellen oder Prinzipien und/oder basierend auf künstlicher Intelligenz durchzuführen. Insbesondere können die von der Bohrmaschine bereitgestellten Überwachungsparameterverläufe mit bohrungsindividuell abgelegten Soll-Überwachungsparameterverläufen oder Soll-Maschinenparameterverläufen verglichen werden, um etwaige Abweichungen im Bohrprozess festzustellen. Anhand spezifischer Algorithmen können dann notwendige Maschineneinstellparameteranpassungen berechnet und der Maschine vorgegeben werden. Auf diese Weise kann die jeweilige Bohrungsqualität weiter optimiert werden. Das Vorgehen zur Anpassung der Maschineneinstellparameter wird vorzugsweise laufend angepasst und mithilfe maschinellen Lernens, beispielsweise mittels eines künstlichen neuronalen Netzwerks verbessert.

In einem weiteren Aspekt betrifft die vorliegende Erfindung eine Verwendung des Systems gemäß einem der vorhergehenden Ansprüche zur Steuerung, Überwachung und/oder Dokumentation einer Vielzahl vorzunehmender Bohrprozesse an einem Werkstück, insbesondere an einem Flugzeugstrukturbauteil. Die Steuerung, Überwachung und/oder Dokumentation erfolgt hierbei vorzugsweise in Echtzeit, d.h. ohne Zeitverzögerung in der Datenübertragung zwischen den einzelnen Komponenten des Systems.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in:
- **Fig. 1**: eine schematische Darstellung einer bevorzugten Ausführungsform des erfindungsgemäßen Systems;
- **Fig. 2**: eine Schnittansicht einer zu setzenden Bohrung in einem mehrlagigen Bauteil;
- **Fig. 3**: eine Verlaufsdarstellung von adaptierbaren Maschineneinstellparametern zum Setzen einer Bohrung in einem mehrlagigen Bauteil;
- **Fig. 4**: eine Verlaufskurve von Soll- und Ist-Maschinenparametern während eines Bohrprozesses am Bauteil;
- **Fig. 5**: eine perspektivische Ansicht einer Positionierung einer Bohrmaschine an einem zu bearbeitenden Bauteil, und
- **Fig. 6**: eine Verlaufsdarstellung von erfassten Beschleunigungswerten am Bohrwerkzeug als Überwachungsparameter - bzw. Überwachungsgröße während des Bohrprozesses am Bauteil.

**Fig. 1** zeigt eine schematische Darstellung einer bevorzugten Ausführungsform des erfindungsgemäßen Systems 10 zur Steuerung und Überwachung von Bohrprozessen an einem Bauteil 4, insbesondere einem Flugzeugstrukturbauteil. Das erfindungsgemäße System 10 weist eine Bohrmaschine 1 mit zugehörigem Bohrwerkzeug, Positioniermittel 3 zur Erfassung einer Bearbeitungs- bzw. Wirkposition 4a,4b,...,4n der Bohrmaschine 1 am Bauteil 4 und eine Steuerungseinheit 2 mit vorzugsweise integrierter Datenspeichereinheit. Die oben genannten Teilsysteme bzw. Komponenten sind über Schnittstellen und vorzugsweise drahtlose Kommunikationswege miteinander verbunden, wodurch eine Daten- oder Triggersignal-Kommunikation zwischen den Komponenten 1,2,3 gewährleistet ist.

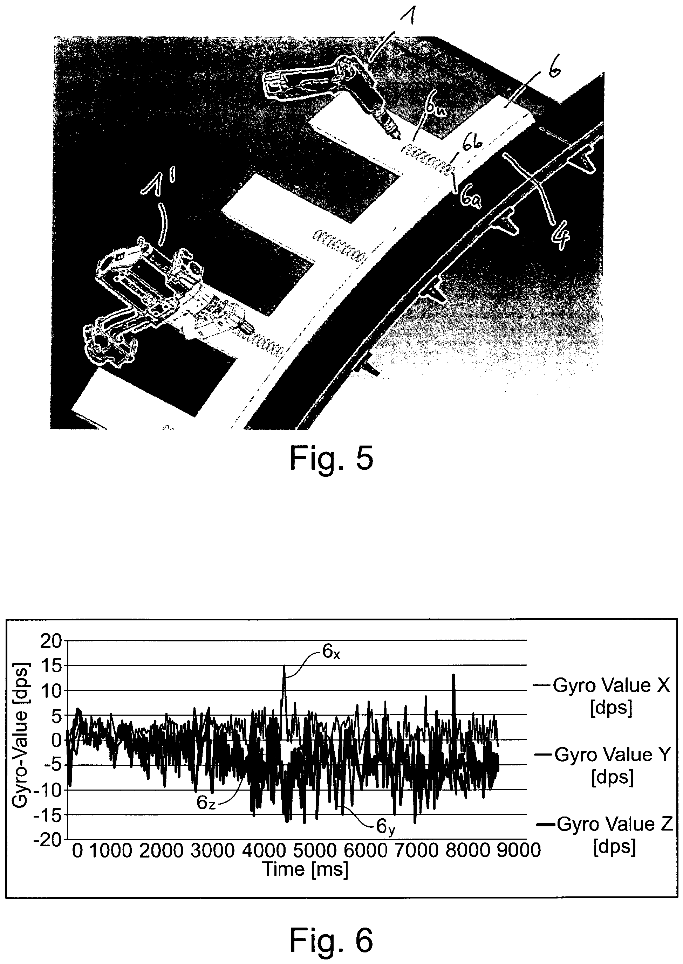

Die Bohrmaschine 1 kann eine manuelle oder semi-automatische Bohrmaschine 1' sein (vgl. Fig. 5). Die Bohrmaschine 1,1' ist ausgebildet, eine Bearbeitung des Bauteils 4, insbesondere das Setzen einer Bohrung 5a,5b,...5n im Bauteil 4 anhand adaptierbarer Maschinenparameter M durchzuführen.

Die Positioniermittel 3 können in der Bohrmaschine 1 wenigstens teilweise integriert sein, mit dieser zusammenwirken (vgl. Datenübertragung P1) oder ein von der Bohrmaschine 1 unabhängiges System darstellen, welches mit der Bohrmaschine 1 vorzugsweise über drahtlose Verbindung kommunizieren kann. Die Positioniermittel 3 können beispielsweise eine an sich bekannte Schablone 6 umfassen (vgl. Fig. 5), welche vor der Bearbeitung am Bauteil 4 angebracht wird und über jeweilige, den zu fertigenden Bohrungen 5a...5n zugeordnete Positionierlöcher oder Positioniervorrichtungen 6a...6n verfügt. Diese ermöglichen in Zusammenwirkung mit einer an der Bohrmaschine 1 angeordneten Kameraeinheit oder RFID-Einheit (nicht gezeigt) die Bereitstellung von Positionsdaten, bezüglich einer momentanen Bearbeitungs- bzw. Wirkposition der Bohrmaschine 1. Die Positionsmittel 3 können alternativ auch andere Mittel zur Erfassung und Bereitstellung von Positionsdaten an die Steuerungseinheit 2 des Systems 10 umfassen. Die jeweiligen Positionsdaten können hierbei von den Positioniermitteln 3 direkt oder indirekt, beispielsweise mittels der Bohrmaschine 1 an die Steuerungseinheit 2 übertragen bzw. dieser bereitgestellt werden. Die Bereitstellung der Positionsdaten erfolgt vorzugsweise in Echtzeit, so dass eine aktuelle Position der Bohrmaschine 1 kontinuierlich überwacht werden kann.

Alternativ können die Positioniermittel 3 und die Steuerungseinheit 2 in einem Gerät integriert sein. In diesem Falle kann eine alternative Datenverbindung der Positioniermittel 3 und der Bohrmaschine 1 vorliegen, wie durch die gestrichelten Linien S' und U' in Fig. 1 gezeigt.

Die Steuerungseinheit 2 weist vorzugsweise eine integrierte oder externe Datenspeichereinheit auf (nicht gezeigt), in welcher vordefinierte Maschineneinstellparameter M der Bohrmaschine 1 oder diese repräsentierende Daten- oder Triggersignale S für die jeweils zu setzende Bohrung orts- bzw. positionsabhängig hinterlegt sind. Die Maschineneinstellparameter M können insbesondere material-, materialpaket- und/oder aufspannungssteifigkeitsabhängig sein, so dass für die jeweils zu setzende Bohrung 5a,5b,...,5n optimierte Parameter hinterlegt und der Bohrmaschine 1 zur jeweiligen Bearbeitung vorgegeben werden können. Die Steuerungseinheit 2 kann somit auf Basis von durch die Positioniermittel 3 bereitgestellten Positionsdaten P der Bohrmaschine 1 die jeweiligen Maschineneinstellparameter M abrufen und der Bohrmaschine 1 zur Ausführung einer jeweils an dieser Wirkposition zu setzenden Bohrung 5a,5b,...,5n zur Verfügung stellen.

Neben den Maschineneinstellparametern M können die von der Steuerungseinheit 2 an die Bohrmaschine 1 übertragenen Daten- und Triggersignale S auch weitere Informationen enthalten. Beispielsweise kann die Steuerungseinheit 2 basierend auf den bereitgestellten Positionsdaten P das Auslösen eines Bearbeitungsprozesses ermöglichen oder auch unterbinden. Hierdurch kann beispielsweise eine abzuarbeitende Bearbeitungsreihenfolge der zu setzenden Bohrungen 5a,5b,...,5n am Bauteil 4 vorgegeben werden. Die Steuerungseinheit 2 kann hierbei ausgebildet sein, nur bei einer korrekten bzw. vorgegebenen nächsten Wirkposition 4a,4b,...,4n die Bearbeitung mittels der Bohrmaschine 1 freizugeben. Die Bohrmaschine 1 kann für diesen Zweck Visualisierungsmittel aufweisen, welche einen Werker über die Zulässigkeit oder Nicht-zulässigkeit eines Bohrprozesses an der jeweiligen Wirkposition informieren. Hierdurch ist es möglich, ein bestimmtes Bohrschema vorzugeben und einzuhalten. Zusätzlich kann die Bohrmaschine 1 auch Navigationsmittel aufweisen, welche den Werker an die nächste geplante Wirkposition führen.

Die Steuerungseinheit 2 kann zudem ausgebildet sein, Bohrpositionsabschnitte zu definieren, in denen die Fertigungsreihenfolge unerheblich ist. Innerhalb eines Abschnitts kann an jeder Wirkposition das Auslösen des Bohrvorgangs durch die Steuerungseinheit 2 freigegeben sein. Um in den nächsten Bohrabschnitt zu kommen, müssen alle Bohrungen des vorherigen Abschnitts fertiggestellt sein.

Die bereitgestellten Maschineneinstellparameter M können jeweils vorgegebene Größen einzelner Bearbeitungsparameter wie beispielsweise die Spindeldrehzahl, einen Vorschub, einen Schmiermittelstrom, ein Mittel zur Absaugung, eine Amplitude eines Peck-Feed-Systems etc. entweder absolut oder wenigstens teilweise kodiert vorgeben, derart, dass diese bohrmaschinenintern in entsprechende Bearbeitungsparameter umgewandelt werden können.

Die Bohrmaschine 1 ist zudem ausgebildet, Überwachungsparameter U an die Steuerungseinheit 2 bereitzustellen bzw. zu übermitteln. Die Bohrmaschine 1 weist hierfür vorzugsweise eine entsprechende Sensorik 1a zur Erfassung von Überwachungsparametern auf. Die Überwachungsparameter können beispielsweise den bereitgestellten Maschineneinstellparametern M entsprechende Ist-Maschinenparameter umfassen, welche dann durch die Steuerungseinheit 2 mit den an die Bohrmaschine 1 übertragenen (Soll-) Maschineneinstellparametern M verglichen werden können. Die Überwachungsparameter können auch weitere Größen umfassen, wie beispielsweise Signale zur Messung eines ein- oder mehrachsigen, translatorischen und/oder rotatorischen Beschleunigungssignals.

Die Steuerungseinheit 2 ist ausgebildet während des Bohrprozesses bereitgestellte Überwachungsparameter zu speichern und den jeweiligen Bohrpositionen am Bauteil zuzuordnen. Auf diese Weise kann eine automatisierte Dokumentation von Bohrprozessdaten für eine Vielzahl von gefertigten Bohrungen 5a,5b,...,5n an einem Bauteil 4 erfolgen. Die Steuerungseinheit 2 kann zudem Kommunikationsmittel (nicht gezeigt) zur elektronischen Datenverarbeitung oder Auswertung bereitstellen oder umfassen.

**Fig. 2** zeigt exemplarisch eine zu fertigende Bohrung 5a in einem Bauteil 4 mit spezifischem Materialpaket. Das Bauteil 10 umfasst eine erste Schicht 7a beispielsweise aus CFK und eine zweite Schicht 7b beispielsweise aus Titan. Diese können unterschiedliche Stärken tₐ, t_{b} aufweisen. Zur Erzielung einer optimierten Bohrungsqualität der Bohrung 5a, kann eine Vielzahl von Parametern, beispielsweise ein Senkwinkel W, eine Senktiefe Sₜ, eine Senkoberfläche S_{O}, eine Rauheit R, ein Durchmesser D, ein Austrittsgrad G und eine zulässige Delamination vorgegeben sein, welche durch die jeweiligen Maschineneinstellparameter M beeinflussbar sind.

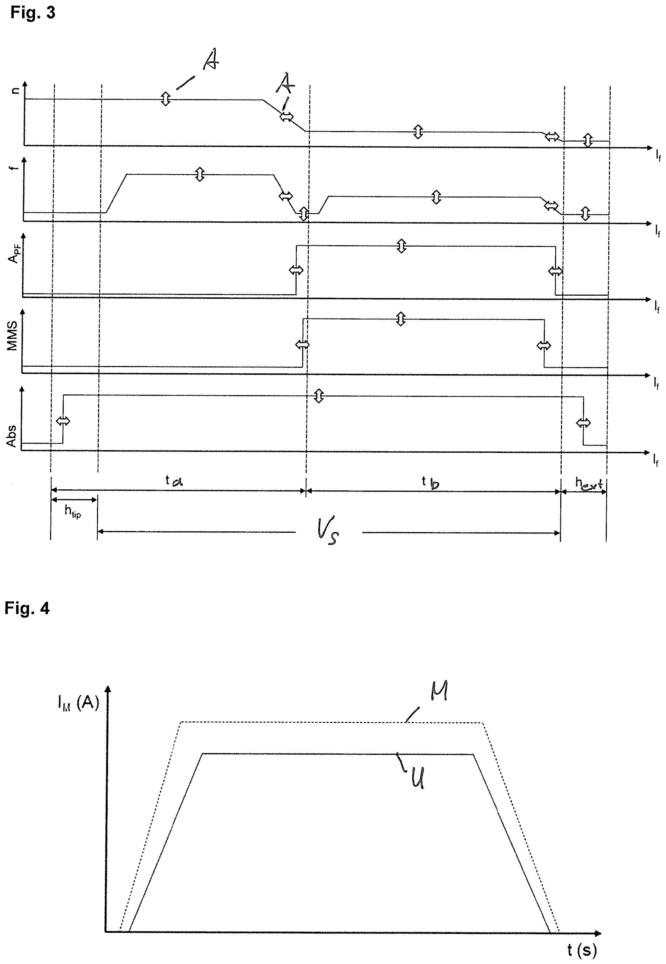

**Fig. 3** zeigt exemplarisch verschiedene bohrzeit- und/oder materialabhängige Maschineneinstellparameter M für einen Bohrprozess zur Fertigung einer Bohrung 5a (vgl. Fig. 2), insbesondere eine Spindeldrehzahl n, ein Vorschub f, eine Amplitude A_{PF} eines Peck-Feed-Systems der Bohrmaschine 1, einen Schmiermittelstrom bzw. ein Parameter zum Einstellen einer Minimalmengenschmierung MMS, und eine Absaugung Abs über den gesamten Bohrprozess einer Bohrung, insbesondere während eines Eintritts hₜᵢₚ, während des Vollschnitts V_{S} durch die erste Materialschicht 7a aus CFK und die zweite Materialschicht 7b aus Titan, sowie beim Austritt aus dem Material hₑₓₜ. Die Maschineneinstellparameter sind, wie durch die Pfeile A in Fig. 3 dargestellt variierbar und beeinflussen die resultierende Bohrqualität.

**Fig. 4** zeigt exemplarisch einen Vergleich eines während eines Bohrprozesses vorgegebenen (Soll-)Maschineneinstellparameters M, vorliegend eines Motorstroms und einer durch die Sensorik 1a der Bohrmaschine 1 detektierten bzw. erfassten Uberwachungsparameter U, vorliegend eines Ist-Motorstroms über den zeitlichen Verlauf eines Bohrprozesses. Wie zuvor beschrieben, ist die Steuerungseinheit 2 und/oder die Bohrmaschine 1 vorzugsweise ausgebildet, die jeweiligen Größen zu vergleichen und basierend darauf eine Anpassung des entsprechenden (Soll-)Maschineneinstellparameters M vorzunehmen bzw. vorzugeben.

**Fig. 6** zeigt exemplarisch einen weiteren Überwachungsparameter U, welche während des Bohrprozesses durch die Sensorik 1a der Bohrmaschine 1 erfasst und an die Steuerungseinheit 2 übermittelt wird. Vorliegend ist dies eine Beschleunigung G_{X}, G_{Y}, G_{Z}, in X, Y, Z-Richtung, insbesondere gemessen am Werkzeug der Bohrmaschine 1. Das bereitgestellte Beschleunigungssignal bzw. die übermittelten Beschleunigungswerte können von der Steuerungseinheit 2 insbesondere hinsichtlich einer Fehlbedienung, eines Zubodenfallens oder einer Kollision der Bohrmaschine 1 mit dem Werkstück 4 analysiert werden.

Im Folgenden wird eine bevorzugte Durchführung eines Bohrprozesses mit dem erfindungsgemäßen System 10 an einem Bauteil 4 beschrieben.

Nach dem Starten bzw. Initialisieren des Systems 10, wobei insbesondere eine Verbindung zwischen den einzelnen Komponenten 1,2,3 hergestellt und geprüft wird, wird die Bohrmaschine 1 durch das Bedienpersonal bzw. einen Werker an eine erste Bohrposition 4a platziert. Die Bohrmaschine 1 kann hierbei beispielsweise durch eine an sich bekannte Druckstempelbuchse in einer Bohrschablone 6 (vgl. Fig. 5) erfolgen, welche eine einer zu fertigenden Bohrung 5a zugeordnete Positioniervorrichtung 6a darstellt.

Dabei bzw. vorzugsweise simultan hierzu erfolgt eine Lokalisierung bzw. Positionsbestimmung des Wirkpunkts der Bohrmaschine 1 mittels der Positioniermittel 3. Nachdem der Werker die Bohrmaschine 1 an der Bohrposition 4a platziert hat, sendet er z. B. durch Betätigen eines Knopfes an der Bohrmaschine 1 den Startbefehl des Bohrens. Dadurch wird ein Abgleich der in der Steuerungseinheit 2 abgelegten SollPositionen und der Ist-Positionen der Bohrmaschine 1 durchgeführt. Falls der Wirkpunkt sich innerhalb eines Toleranzbereichs einer Soll-Position befindet und für diese Bohrposition eine Freigabe in der Zuordnung der Steuerungseinheit 2 vorliegt, werden die zugehörigen Maschineneinstellparameter M geladen und die Bohrung gefertigt.

Falls die Bohrmaschine 1 an einer Position platziert wird, für die keine Bohrfreigabe existiert, wird ein Auslösen des Bohrvorgangs verhindert und der Werker vorzugsweise darüber informiert, beispielsweise mit entsprechenden Ausgabemitteln an der Bohrmaschine. Zur Sicherstellung einer vorgegebenen Bohrreihenfolge kann zudem basierend auf einer vorherigen Definition der Prozessreihenfolge eine grafische Navigation umgesetzt werden, womit der Werker an die nächste zu bearbeitende Position geführt wird.

Während des Bohrprozesses werden die mit der Sensorik 1a der Bohrmaschine 1 aufgenommenen Überwachungsparameter U in der Datenspeichereinheit der Steuerungseinheit 2 abgespeichert und vorzugsweise mit den jeweils entsprechenden vorgegebenen Soll-Werten verglichen (vgl. Fig. 4). Bei einer Abweichung werden durch die Steuerungseinheit 2 und/oder durch die Bohrmaschine 1 die Maschineneinstellparameter M angepasst, um einen zu den Qualitätsansprüchen äquivalenten Prozessgrößenverlauf sicherzustellen.

Des Weiteren können die Überwachungsparameter U als Grundlage für die Berechnung der Zerspanleistung und der Zerspanenergie der Bohrung 5a verwendet werden, um ggf. ein adaptives Bremsen des Werkzeugs vor dem Materialaustritt zu bewirken, was die Gratbildung am Bohrungsaustritt verringert.

Weiterhin können die Überwachungsparameter und vorzugsweise die daraus berechnete Zerspanleistung und / oder Zerspanenergie mit Kenntnis der gebohrten Werkstoffe aus der Steuerungseinheit 2 für eine Kumulation des Werkzeugverschleißes und / oder für eine adaptive Festlegung des Werkzeugwechsels und / oder des Standzeitendes genutzt werden. Dies ermöglicht eine bessere Werkzeugnutzung.

Im Anschluss an den Fertigungsprozess werden die Überwachungsparameter U und/oder entsprechende speicherplatzoptimierte Kennzahlen mittels der Steuerungseinheit 2 abgespeichert. Hierbei steht einem Benutzer frei, welche Datenpakete gesichert werden. Die Erzeugung der Kennzahlen erfolgt vorzugsweise mithilfe spezifischer mathematischer Verfahren. Die Überwachungsparameter U können auf einem externen Datenspeicher abgelegt werden, dessen Ort in einer Zuordnungstabelle verzeichnet ist. Hierbei wird eine lückenlose Dokumentation der erfassten Überwachungsparameter ermöglicht.

Des Weiteren wird vorzugsweise zu Dokumentationszwecken der Produktionsstand in einer Zuordnungstabelle auf der Datenspeichereinheit abgelegt und/oder der Freigabestand für die nächste Bohrung aktualisiert. Zudem können zur Abschätzung eines Werkzeugverschleißes die Überwachungsparameter U mithilfe geeigneten physikalischer und mathematischer Modelle verarbeitet werden. Hierbei können entsprechende KI Algorithmen oder entsprechend antrainierte künstliche neuronale Netzwerke zur Anwendung kommen.

Im Nachgang des Bohrprozesses am Bauteil 4 kann gemäß vorher definierter Verfahren eine manuelle oder automatische Qualitätsbeurteilung (vgl. Bild 2) der gefertigten Bohrung 5a vorgenommen werden. Dabei können entsprechende, die Bohrungsqualität wiederspiegelnde Kenngrößen analysiert und mit ihnen eine Klassifizierung der Bohrqualität durchgeführt werden. Die Qualitätskenngrößen können dann der jeweiligen Bohrung 5a,5b,...,5n in der Datenspeichereinheit dokumentationsgerecht zugeordnet und abgespeichert werden. Mit den abgeleiteten Qualitätskriterien ist eine direkte Beurteilung der erfolgten Bohrprozesse möglich. Zudem können Tendenzen und Qualitätsschwankungen analysiert werden.

Die Steuerungseinheit 2 kann zudem derart ausgebildet sein, dass die gesammelten Überwachungsparameter U und/oder weitere Kenngrößen derart elektronisch verarbeitet werden, sodass eine vorzugsweise während des Fertigungsprozesses fortlaufende "In-Process"-Maschineneinstellparameteranpassung erfolgt. Hierbei kann die Steuerungseinheit 2 vorzugsweise auf entsprechende KI Algorithmen oder entsprechend antrainierte künstliche neuronale Netzwerken zurückgreifen. Diese können auf eine große Vielzahl an Daten bereits analysierter Bohrungen und die jeweils dafür hinterlegten Bohrprozessdaten, Überwachungsparameter und/oder weitere Qualitätskenngrößen zurückgreifen.

### Bezugszeichenliste

- 1: Bohrmaschine
- 1': Semi-automatische Bohrmaschine
- 1a: Sensorik
- 2: Steuerungseinheit
- 3: Positioniermittel
- 4: Werkstück
- 4a,4b,...,4n: Bearbeitungs- bzw. Wirkpositionen
- 5a,5b,...,5n: Bohrungen
- 6: Bohrschablone
- 6a,6b,...,6n: Positionslöcher
- 7a: CFK Schicht
- 7b: Titan Schicht
- 10: Steuerungs- und Überwachungssystem für Bohrprozesse
- S: Daten- oder Triggersignale
- S': alternative Übertragung der Daten- oder Triggersignale
- M: Maschineneinstellparameter (Soll-Maschinenparameter)
- M_{I}: Ist-Maschinenparameter
- P: Positionsdaten
- P₁: Datenübertragung zw. Positioniermitteln und Maschine
- U: Überwachungsparameter
- U': alternative Übertragung Überwachungsparameter
- tₐ: Stärke CFK Schicht
- t_{b}: Stärke Titan Schicht
- hₜᵢₚ: Stärke Materialeintritt beim Bohrprozess
- hₑₓₜ: Stärke Materialaustritt beim Bohrprozess
- V_{S}: Vollschnitt
- W: Senkwinkel
- Sₜ: Senktiefe
- S_{O}: Senkoberfläche
- R: Rauheit
- D: Durchmesser
- G: Austrittsgrat
- G_{X},G_{Y},G_{Z}: Beschleunigungswert in X, Y-, Z-Richtung

## Patentansprüche

1. System zur Steuerung und Überwachung von Bohrprozessdaten bei der Bearbeitung eines Werkstücks (4), insbesondere bei der Bearbeitung eines Flugzeugstrukturbauteils, aufweisend:
eine manuelle oder semi-automatische Bohrmaschine (1), ausgebildet eine Bearbeitung eines Werkstücks (4) basierend auf adaptierbaren Maschineneinstellparameter (M) durchzuführen,
eine Steuerungseinheit (2) zur Steuerung und Speicherung von Bohrprozessdaten,
Positioniermittel (3) zur Erfassung einer Bearbeitungsposition (4a,4b,...,4n) der Bohrmaschine (1) am zu bearbeitenden Werkstück (4) und zur direkten oder indirekten Bereitstellung von entsprechenden Positionsdaten (P) an die Steuerungseinheit (1),
wobei die Steuerungseinheit (2) ausgebildet ist, basierend auf den bereitgestellten Positionsdaten (P) vorzugsweise automatisch individuelle Daten- oder Triggersignale (S), insbesondere individuelle Maschineneinstellparameter (M), an die Bohrmaschine (1) zur Bearbeitung des Werkstücks (4) bereitzustellen,
**dadurch gekennzeichnet,**
**dass** die Bohrmaschine (1) ausgebildet ist, bei der Bearbeitung des Werkstücks (4) Überwachungsparameter (U) zu erfassen und diese der Steuerungseinheit (2) bereitzustellen, und
wobei die Steuerungseinheit (2) ausgebildet ist, die von der Bohrmaschine (1) bereitgestellten Überwachungsparameter (U) für eine gefertigte Bohrung (5a,5b,...,5n) einer jeweiligen Bearbeitungsposition (4a,4b,... ,4n) zuzuordnen, und vorzugsweise die von der Bohrmaschine (1) bereitgestellten Überwachungsparameter (U) mit vordefinierten und/oder berechneten Sollwerten, Grenzwerten oder Wertebereichen einer jeweiligen gefertigten Bohrung (5a,5b,... ,5n) zu vergleichen.

2. System nach Anspruch 1, wobei die Bohrmaschine (1), die Steuerungseinheit (2) und/oder die Positioniermittel (3) zur bidirektionalen und/oder drahtlosen Kommunikation ausgebildet sind.

3. System nach Anspruch 1 oder 2, wobei die Steuerungseinheit (2) ausgebildet ist, der Bohrmaschine (1) material-, materialpaket- und/oder aufspannungssteifigkeitsabhängige Daten- oder Triggersignale (S) basierend auf den bereitgestellten Positionsdaten (P) bereitzustellen.

4. System nach einem der vorhergehenden Ansprüche, wobei die bereitgestellten Daten- oder Triggersignale (S) wenigstens eine Spindeldrehzahl, einen Vorschub, einen Schmiermittelstrom, ein Mittel zur Absaugung, eine Amplitude eines Peck-Feed-Systems, einen intermittierenden Rückhub und/oder eine Verweilzeit der Bohrmaschine (1) vor, zwischen, oder nach einzelnen Bearbeitungsschritten an einer jeweiligen Bearbeitungsposition (4a,4b,...,4n) umfassen.

5. System nach einem der vorhergehenden Ansprüche, wobei die Steuerungseinheit (2) und/oder die Bohrmaschine (1) ausgebildet ist, der Bohrmaschine (1) eine Bearbeitungsreihenfolge am Werkstück (4) basierend auf den bereitgestellten Positionsdaten (P) vorzugeben und/oder bei Nichteinhaltung einer vorgebenden Bearbeitungsreihenfolge ein Auslösen eines Bearbeitungsprozesses durch die Bohrmaschine (1) zu verhindern.

6. System nach einem der vorhergehenden Ansprüche, wobei die Steuerungseinheit (2) und/oder die Bohrmaschine (1) Navigationsmittel aufweist oder mit Navigationsmittel verbindbar ist, welche zur vorzugsweise graphischen Darstellung und/oder zur Führung der Bohrmaschine (1) an eine vordefinierte, vorzugsweise eine nächste, Bearbeitungsposition (4a,4b,...,4n) ausgebildet sind.

7. System nach einem der vorhergehenden Ansprüche, wobei die Bohrmaschine (1) eine Sensorik (1a) zur Erfassung der Überwachungsparameter (U) aufweist, insbesondere eine Sensorik zur Erfassung einer Stromaufnahme, eines Luftvolumenstroms, einer Drehzahl und /oder eines pneumatischen Differenzdrucks eines oder mehrerer Antriebe der Bohrmaschine (1) und/oder eines ein- oder mehrachsigen, translatorischen und/oder rotatorischen Beschleunigungssignals.

8. System nach Anspruch 1, wobei die Steuerungseinheit (2) ausgebildet ist, die vordefinierten Sollwerte, Grenzwerte oder Wertebereiche positions-, material- und/oder materialpaketabhängig zu speichern und zur elektronischen Datenverarbeitung bereitzustellen, und/oder wobei die vordefinierten Sollwerte, Grenzwerte oder Wertebereiche wenigstens teilweise auf Basis von von der Bohrmaschine (1) bereitgestellten Überwachungsparametern (U) berechnet oder definiert werden.

9. System nach einem der vorhergehenden Ansprüche, wobei die Steuerungseinheit (2) und/oder die Bohrmaschine (1) ausgebildet sind, bei einer zu fertigenden Bohrung (5a,5b,...,5n) die bereitgestellten Daten- oder Triggersignale (S), insbesondere die Maschineneinstellparameter (M), und die zugehörigen Überwachungsparameter (U), insbesondere Ist-Maschinenparameter (M_{I}), vorzugsweise simultan zu vergleichen, und bei Abweichung der Überwachungsparameter, insbesondere von vordefinierten Sollwerten, Grenzwerten oder Wertebereichen, eine Anpassung der Daten- oder Triggersignale (S), insbesondere der Maschineneinstellparameter (M), vorzunehmen.

10. System nach einem der vorhergehenden Ansprüche, wobei die Steuerungseinheit (2) ausgebildet ist, basierend auf von der Bohrmaschine (1) bereitgestellten Überwachungsparametern (U) bezüglich eines Motorstrom- und/oder Drehzahlsignals oder einer anderen mit der Motorleistung korrelierenden Größe über eine Bohrzeit ein Schnittmoment, eine Zerspanleistung und/oder eine Zerspanenergie zu bestimmen und einer gefertigten Bohrung (5a,5b,...,5n) an einer jeweiligen Bearbeitungsposition (4a,4b,...4n) zuzuordnen.

11. System nach Anspruch 10, wobei die Steuerungseinheit (2) ausgebildet ist, der Bohrmaschine (1) eine maximale Spindeldrehzahl und/oder einen maximalen Vorschub in Abhängigkeit der jeweiligen Bearbeitungsposition (4a,4b,...,4n) und der aufgebrachten Zerspanleistung, einer Bohrzeit und/oder einer aktuellen Bohrtiefe bereitzustellen.

12. System nach einem der vorhergehenden Ansprüche, wobei die Steuerungseinheit (2) ausgebildet ist, die bereitgestellten Überwachungsparameter (U) den jeweiligen gefertigten Bohrungen (5a,5b,...,5n) an den Bearbeitungspositionen (4a,4b,...,4n) zuzuordnen und zu Dokumentationszwecken abzuspeichern, mit weiteren Informationen, insbesondere mit Informationen hinsichtlich Prozesslasten, einer Bohrungsqualität einzelner Bohrungen (5a,5b,...,5n) und/oder einem aufgetretenen Werkzeugverschleiß, zu vergleichen, und/oder zur weiterer elektronischen Datenverarbeitung bereitzustellen.

13. System nach einem der vorhergehenden Ansprüche, wobei die Steuerungseinheit (2) ausgebildet ist, eine Prozesssteuerung, Prozessanpassung und Prozessauswertung basierend auf den über eine Vielzahl von gesetzten Bohrungen (5a,5b,...,5n) gesammelten Überwachungsparametern (U) und basierend auf zuvor definierten mathematischen Modellen oder Prinzipien und/oder basierend auf künstlicher Intelligenz durchzuführen.

14. Verwendung des Systems nach einem der vorhergehenden Ansprüche zur Steuerung, Überwachung und/oder Dokumentation einer Vielzahl vorzunehmender Bohrprozesse an einem Werkstück, insbesondere an einem Flugzeugstrukturbauteil.

## Claims

1. A system for controlling and monitoring drilling process data when machining a work piece (4), in particular when machining an aerostructural component, the system comprising:
a manual or semi-automatic drill (1) configured to machine a work piece (4) based on adaptable machine setting parameters (M);
a control unit (2) for controlling and storing drilling process data; and
positioning means (3) for detecting a machining position (4a, 4b, ..., 4n) of the drill (1) at the work piece (4) to be machined and for directly or indirectly providing corresponding position data (P) to the control unit (1),
the control unit (2) being configured to provide, preferably automatically, individual data or trigger signals (S), in particular individual machine setting parameters (M), to the drill (1) for machining the work piece (4) based on the provided position data (P),
**characterized in that**
the drill (1) is configured to detect monitoring parameters (U) while machining the work piece (4) and provide them to the control unit (2), the control unit (2) being configured to link the monitoring parameters (U) provided by the drill (1) for a completed drill hole (5a, 5b, ..., 5n) with an associated machining position (4a, 4b, ..., 4n) and preferably to compare the monitoring parameters (U) provided by the drill (1) to predefined and/or calculated target values, limit values or value ranges of a given completed drill hole (5a, 5b, ..., 5n).

2. The system according to claim 1, wherein the drill (1), the control unit (2) and/or the positioning means (3) are equipped for bidirectional and/or wireless communication.

3. The system according to claim 1 or 2, wherein the control unit (2) is configured to provide the drill (1) with material-, material-package- and/or clamping-stiffness-dependent data or trigger signals (S) based on the position data (P) provided.

4. The system according to any one of the preceding claims, wherein the data or trigger signals (S) provided comprise at least a spindle speed, a feed rate, a lubricant flow, a suction means, an amplitude of a peck-feed system, an intermittent back stroke, and/or a dwell time of the drill (1) before, between or after individual machining steps at a given machining position (4a, 4b, ..., 4n).

5. The system according to any one of the preceding claims, wherein the control unit (2) and/or the drill (1) is configured to set a machining sequence for the drill (1) on the work piece (4) based on the position data (P) provided and/or to prevent triggering of a machining process by the drill (1) if a preset machining sequence is not followed.

6. The system according to any one of the preceding claims, wherein the control unit (2) and/or the drill (1) has navigation means or is configured to be connected to navigation means capable of graphical representation and/or of guiding the drill (1) to a predefined, preferably next, machining position (4a, 4b, ..., 4n).

7. The system according to any one of the preceding claims, wherein the drill (1) has a sensor system (1a) for detecting the monitoring parameters (U), in particular a sensor system for detecting a power consumption, an air volume flow, a speed of rotation and/or a pneumatic differential pressure of one or more drives of the drill (1) and/or a single-axis or multi-axis translational and/or rotational acceleration signal.

8. The system according to claim 1, wherein the control unit (2) is configured to store the predefined target values, limit values or value ranges as a function of position, material and/or material package and provide them for electronic data processing, and/or wherein the predefined target values, limit values or value ranges are calculated or defined at least partially based on monitoring parameters (U) provided by the drill (1).

9. The system according to any one of the preceding claims, wherein the control unit (2) and/or the drill (1) are configured to compare, preferably simultaneously, the data or trigger signals (S) provided, in particular the machine setting parameters (M), and the associated monitoring parameters (U), in particular current machine parameters (M_{I}), when a drill hole (5a, 5b, ..., 5n) is to be placed and to adjust the data or trigger signals (S), in particular the machine setting parameters (M), if the monitoring parameters deviate, in particular from predefined target values, limit values or value ranges.

10. The system according to any one of the preceding claims, wherein the control unit (2) is configured to determine a cutting moment, a cutting capacity and/or a cutting energy based on monitoring parameters (U) provided by the drill (1) with respect to a motor-current and/or RPM signal or another variable correlating with the motor power over a drilling time and to link the same to a completed drill hole (5a, 5b, ..., 5n) at a given machining position (4a, 4b, ..., 4n).

11. The system according to claim 10, wherein the control unit (2) is configured to provide the drill (1) with a maximum spindle speed and/or a maximum feed rate as a function of the given machining position (4a, 4b, ..., 4n) and the cutting capacity applied, a drilling time and/or a current drilling depth.

12. The system according to any one of the preceding claims, wherein the control unit (2) is configured to link the provided monitoring parameters (U) to the respective completed drill holes (5a, 5b, ..., 5n) at the machining positions (4a, 4b, ..., 4n) and store them for documentation purposes, compare them to other information, in particular information regarding process loads, a drilling quality of individual drill holes (5a, 5b, ..., 5n) and/or tool wear having occurred, and/or provide them for further electronic data processing.

13. The system according to any one of the preceding claims, wherein the control unit (2) is configured to carry out process control, process adjustment and process evaluation based on the monitoring parameters (U) gathered across a plurality of drill holes (5a, 5b, ..., 5n) placed and based on mathematical models or principles defined in advance and/or based on artificial intelligence.

14. Use of the system according to any one of the preceding claims for controlling, monitoring and/or documenting a plurality of drilling processes to be carried out on a work piece, in particular an aerostructural component.

## Revendications

1. Système de commande et de surveillance de données de processus de perçage lors de l'usinage d'une pièce à usiner (4), notamment lors de l'usinage d'un composant d'aérostructure, le système comprenant :
une perceuse (1) manuelle ou semi-manuelle configurée pour usiner une pièce à usiner (4) sur la base de paramètres de réglage de machine (M) adaptables,
une unité de commande (2) destinée à commander et stocker des données de processus de perçage,
des moyens de positionnement (3) destinés à détecter une position d'usinage (4a, 4b, ..., 4n) de la perceuse (1) sur la pièce à usiner (4) et pour fournir directement ou indirectement des données de position (P) correspondantes à l'unité de commande (1),
l'unité de commande (2) étant configurée pour fournir, de préférence automatiquement, des signaux de données ou de déclenchement individuels, notamment des paramètres de réglage de machine (M) individuels, à la perceuse (1) sur la base des données de position (P) fournies pour l'usinage de la pièce à usiner (4),
**caractérisé en ce que**
la perceuse (1) est configurée pour détecter des paramètres de surveillance (U) pendant l'usinage de la pièce à usiner (4) et les fournir à l'unité de commande (2), l'unité de commande (2) étant configurée pour associer les paramètres de surveillance (U) fournis par la perceuse (1) pour un trou de perçage (5a, 5b, ..., 5n) fini à une position d'usinage (4a, 4b, ..., 4n) respective et, de préférence, comparer les paramètres de surveillance (U) fournis par la perceuse (1) à des valeurs cibles, des valeurs de limite ou des gammes de valeurs prédéfinies et/ou calculées d'un trou de perçage (5a, 5b, ..., 5n) fini respectif.

2. Système selon la revendication 1, dans lequel la perceuse (1), l'unité de commande (2) et/ou les moyens de positionnement (3) sont aptes à communiquer bidirectionnellement et/ou sans fil.

3. Système selon la revendication 1 ou 2, dans lequel l'unité de commande (2) est configurée pour fournir à la perceuse (1) des signaux de données ou de déclenchement (S) dépendants d'un matériau, d'un paquet de matériaux et/ou d'une rigidité de serrage sur la base des données de position (P) fournies.

4. Système selon l'une quelconque des revendications précédentes, dans lequel les signaux de données ou de déclenchement (S) fournis comprennent au moins une vitesse de broche, une vitesse d'avancement, un écoulement de lubrifiant, un moyen d'aspiration, une amplitude d'un système avec un cycle de débourrage (anglais : *peck-feed system*), une course de retour intermittente et/ou une durée de séjour de la perceuse (1) avant, pendant ou après des étapes d'usinage individuelles à une position d'usinage (4a, 4b, ..., 4n) respective.

5. Système selon l'une quelconque des revendications précédentes, dans lequel l'unité de commande (2) et/ou la perceuse (1) est configurée pour prédéfinir une séquence d'usinage pour la perceuse (1) sur le pièce à usiner (4) sur la base des données de position (P) fournis et/ou empêcher le déclenchement d'un processus d'usinage par la perceuse (1) si une séquence d'usinage prédéfinie n'est pas suivie.

6. Système selon l'une quelconque des revendications précédentes, dans lequel l'unité de commande (2) et/ou la perceuse (1) a des moyens de navigation ou est configurée pour être connectée à des moyens de navigation configurés pour une représentation graphique et/ou pour guider la perceuse (1) à une position d'usinage (4a, 4b, ..., 4n) prédéfinie, de préférence une position d'usinage prochaine.

7. Système selon l'une quelconque des revendications précédentes, dans lequel la perceuse (1) a un système de capteurs (1a) destiné à détecter les paramètres de surveillance (U), notamment un système de capteurs destiné à détecter une consommation de courant, un débit d'air, une vitesse de rotation et/ou une pression différentielle pneumatique d'un dispositif d'entraînement ou de plusieurs dispositifs d'entraînement de la perceuse (1) et/ou un signal d'accélération translatoire et/ou rotatif uniaxe ou multiaxe.

8. Système selon la revendication 1, dans lequel l'unité de commande (2) est configurée pour stocker les valeurs cibles, les valeurs de limite ou les gammes de valeurs prédéfinies en fonction d'une position, d'un matériau et/ou d'un paquet de matériaux et les fournir pour le traitement de données électronique, et/ou dans lequel les valeurs cibles, les valeurs de limite ou les gammes de valeurs prédéfinies sont calculées ou définies au moins partiellement sur la base de paramètres de surveillance (U) fournis par la perceuse (1).

9. Système selon l'une quelconque des revendications précédentes, dans lequel l'unité de commande (2) et/ou la perceuse (1) sont configurées pour comparer, de préférence simultanément, les signaux de données ou de déclenchement (S) fournis, notamment les paramètres de réglage de machine (M), et les paramètres de surveillance (U) associés, notamment des paramètres de machine actuels (M_{I}), quand un trou de perçage (5a, 5b, ..., 5n) doit être percé et pour ajuster les signaux de données ou de déclenchement (S), notamment les paramètres de réglage de machine (M), si les paramètres de surveillance diffèrent, notamment de valeurs cibles, de valeurs de limite ou de gammes de valeurs prédéfinies.

10. Système selon l'une quelconque des revendications précédentes, dans lequel l'unité de commande (2) est configurée pour déterminer un moment de coupage, une capacité de coupage et/ou une énergie de coupage sur la base de paramètres de surveillance (U) fournis par la perceuse (1) concernant un signal de courant de moteur et/ou de vitesse de rotation ou une autre variable corrélant avec la puissance de moteur sur une durée de perçage et pour les associer à un trou de perçage (5a, 5b, ..., 5n) fini à une position d'usinage (4a, 4b, ..., 4n) respective.

11. Système selon la revendication 10, dans lequel l'unité de commande (2) est configurée pour fournir à la perceuse (1) une vitesse de broche maximale et/ou une vitesse d'avancement maximale en fonction de la position d'usinage (4a, 4b, ..., 4n) respective et de la capacité de coupage appliquée, d'une durée de perçage et/ou d'une profondeur de perçage actuelle.

12. Système selon l'une quelconque des revendications précédentes, dans lequel l'unité de commande (2) est configurée pour associer les paramètres de surveillance (U) fournis aux trous de perçage (5a, 5b, ..., 5n) finis respectifs aux positions d'usinage (4a, 4b, ..., 4n) et les stocker à des fins de documentation, les comparer à des autres informations, notamment des informations concernant des charges de processus, une qualité de perçage de trous de perçage (5a, 5b, ..., 5n) individuels et/ou une usure d'outil apparue et/ou les fournir pour le traitement de données électronique supplémentaire.

13. Système selon l'une quelconque des revendications précédentes, dans lequel l'unité de commande (2) est configurée pour effectuer une commande de processus, un ajustement de processus et une évaluation de processus sur la base des paramètres de surveillance (U) recueillis sur une pluralité de trous de perçage (5a, 5b, ..., 5n) percés et sur la base de modèles ou principes mathématiques définis précédemment et/ou sur la base de l'intelligence artificielle.

14. Utilisation du système selon l'une quelconque des revendications précédentes pour commander, surveiller et/ou documenter une pluralité de processus de perçage à effectuer sur une pièce à usiner, notamment un composant d'aérostructure.
